(19) **Europäisches Patentamt / European Patent Office / Office européen des brevets**

(11) **EP 1 950 622 A2**

(12) # EUROPEAN PATENT APPLICATION

(43) Date of publication:
  **30.07.2008 Bulletin 2008/31**

(51) Int Cl.:
  ***G03G 15/04*** *(2006.01)*

(21) Application number: **08005506.4**

(22) Date of filing: **18.04.2005**

(84) Designated Contracting States:
  **AT BE BG CH CY CZ DE DK EE ES FI FR GB GR HU IE IS IT LI LT LU MC NL PL PT RO SE SI SK TR**

(30) Priority: **20.04.2004 JP 2004124576**
  **20.04.2004 JP 2004124577**
  **20.04.2004 JP 2004124578**
  **16.02.2005 JP 2005039306**

(62) Document number(s) of the earlier application(s) in accordance with Art. 76 EPC:
  **05008395.5 / 1 589 383**

(71) Applicant: **Seiko Epson Corporation**
  **Shinjuku-ku**
  **Tokyo 163-0811 (JP)**

(72) Inventors:
  • **Nomura, Yujiro**
    **Suwa-shi**
    **Nagano-ken 392-8502 (JP)**
  • **Ikuma, Ken**
    **Suwa-shi**
    **Nagano-ken 392-8502 (JP)**

(74) Representative: **HOFFMANN EITLE**
  **Patent- und Rechtsanwälte**
  **Arabellastrasse 4**
  **81925 München (DE)**

Remarks:
  This application was filed on 25-03-2008 as a divisional application to the application mentioned under INID code 62.

(54) **Apparatus for and method of forming image using oscillation mirror**

(57)   In the image forming apparatus, startup process is executed upon power-on, prior to printing or at other proper timing to thereby adjust such that a deflector such as an oscillation mirror (65) makes a light beam scan favorably. To be more specific, the following startup process is performed. Amplitude ensuring process is executed before turning on a laser source (62), and the amplitude value of the deflector is set equal to or larger than a minimum amplitude value. The laser source is then turned on. As a result, at the time of turning on of the laser source, the light beam already scans to move past at least horizontal synchronization sensors (60A, 60B). This prevents concentration of the light beam upon a certain portion of a photosensitive member (2).

FIG. 5

**EP 1 950 622 A2**

## Description

BACKGROUND OF THE INVENTION

1. Field of the Invention

The present invention relates to an image forming apparatus and an image forming method with which it is possible to form an image as an oscillation mirror having a deflection mirror surface resonates and deflects a light beam from a light source and the light beam accordingly scans on a latent image carrier.

2. Description of the Related Art

As an image forming apparatus which uses a resonant-type oscillation mirror as a deflector, the image forming apparatus described in Japanese Patent Application Laid-Open Gazette No. H1-302317 for instance is known. An oscillation mirror is applied with a drive signal and made oscillate in this image forming apparatus, and the frequency of the drive signal is matched with the characteristic resonant frequency of the oscillation mirror. This is to obtain a relatively large amplitude by resonating the oscillation mirror.

Further, in this image forming apparatus, a light source such as a semiconductor laser is modulated in accordance with an image signal, and the light beam corresponding to the image signal is emitted toward the resonating oscillation mirror. The oscillation mirror deflects the light beam, and the light beam is guided to the latent image carrier such as a photosensitive member through a lens system. In this manner, the light beam modulated in accordance with the image signal scans on the latent image carrier, and an electrostatic latent image corresponding to the image signal is formed on the latent image carrier.

In addition, for the purpose of forming a favorable image, this apparatus is equipped with an optical detection sensor such as a photo sensor which is disposed on the scanning path of the light beam. In short, the optical detection sensor, receiving the scanning light beam, outputs an electric signal as a horizontal synchronizing signal at the timing of receiving the light. A controller which controls the entire apparatus controls respective portions of the apparatus based on the horizontal synchronizing signal, whereby an image is formed.

SUMMARY OF THE INVENTION

By the way, in this type of image forming apparatus, at power-on, prior to printing or at other proper timing, a startup process is executed for adjustment such that a deflector such as an oscillation mirror makes a light beam scan in a favorable manner. To be more specific, the following startup process is executed. First, the deflector is driven after emission of the light beam from the light source. Scanning with the light beam is then confirmed based on an output from the optical detection sensor. In the event that the scanning speed of the light beam on the latent image carrier is off a predetermined value, the amplitude of the deflector is changed and the scanning speed is matched with the predetermined value. After the light beam has started scanning on the latent image carrier stably at the predetermined speed, Ready signal which permits the start of printing is output and the startup process ends. Following this, at proper timing, image forming processing is executed based on the image signal.

However, since the deflector operates after emission of the light beam from the light source, the deflector remains in a halt from turning on of the light source until the start of oscillations of the deflector. This keeps exposing one point on the latent image carrier to irradiation with the light beam, causing a problem of deterioration of the latent image carrier. Further, there is another problem described below when a resonant-type oscillation mirror is used as the deflector, owing to the structure and operation of the deflector.

When a polygon mirror is used as the deflector, the polygon mirror rotates, as a motor which is a drive source to rotate the polygon mirror is provided with electric power, thereby scanning the light beam over a predetermined scanning width without fail. Hence, as long as the polygon mirror is operating, the light beam scans across the entire scanning width, and concentration of the light beam in a certain portion of the latent image carrier is prevented. Meanwhile, a resonant-type oscillation mirror, receiving the drive signal whose frequency is identical to the characteristic resonant frequency of the oscillation mirror, resonates and achieves a predetermined deflection angle. Due to this, when an external factor such as an environment of use, a difference among individual oscillation mirrors or the like gives rise to a disagreement between the resonant frequency and the drive frequency, which may lead to a decrease of the amplitude value of the pivoting oscillation mirror. This may result in concentrated irradiation of the light beam in a certain portion of the latent image carrier despite the operation of the oscillation mirror, and hence, deterioration of the latent image carrier.

Further, if the scanning width of the light beam shrinks to the extent beyond the reach of the optical detection sensor, control of driving of the oscillation mirror based on the output from the optical detection sensor becomes impossible and the startup process can not be completed. In the case of the deflector which uses an oscillator which is manufactured using a micro machining technique described in Japanese Patent Application Laid-Open Gazette No. H1-302317, a slight difference between the resonant frequency and the drive frequency will greatly reduce the amplitude of the oscillation mirror. Hence, in the image forming apparatus which uses such an oscillation mirror, the problem above is more serious.

A primary object of the present invention is to provide an image forming apparatus and an image forming method with which it is possible to control, in a favorable manner, scanning with a light beam by means of an optical detection sensor without damaging a latent image carrier.

According to a first aspect of the present invention, there is provided an image forming apparatus, comprising: a light source which emits a light beam; an oscillation mirror which has a deflection mirror surface; a latent image carrier which is structured to rotate; a mirror driver which resonates said oscillation mirror so that the deflection mirror surface deflects the light beam from said light source to scan on said latent image carrier which is rotating to perform an image formation; and an optical detection sensor which is disposed on a scanning path of the light beam, detects the scanning light beam and outputs a signal, wherein turning on of said light source is permitted after an amplitude ensuring process is executed, the amplitude ensuring process in which said oscillation mirror is resonated in an amplitude equal to or larger than a minimum amplitude value which is necessary for the scanning light beam to move past said optical detection sensor.

According to a second aspect of the present invention, there is provided an image forming method of an apparatus which comprises an oscillation mirror which has a deflection mirror surface, a light source which emits a light beam, and a latent image carrier, said method in which the deflection mirror surface of the oscillation mirror which is resonated deflects the light beam from the light source, and the light beam scans on the latent image carrier to perform an image formation, said method comprising: an image forming step of performing the image formation based on a signal which an optical detection sensor which is disposed on a scanning path of the light beam outputs every time the optical detection sensor detects the light beam; and a startup step of stabilizing resonance of the oscillation mirror prior to said image forming step, wherein said startup step comprises: an amplitude ensuring step of, while maintaining the light source turned off, resonating the oscillation mirror in an amplitude equal to or larger than a minimum amplitude value which is necessary for the scanning light beam to move past the optical detection sensor; and an adjustment step of, after execution of said amplitude ensuring step, turning on the scanning light and adjusting a drive condition for the oscillation mirror based on the signal which the optical detection sensor outputs.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

BRIEF DESCRIPTION OF THE DRAWINGS

Fig. 1 is a drawing which shows a first embodiment of an image forming apparatus according to the present invention.
Fig. 2 is a block diagram which shows an electric structure of the image forming apparatus which is shown in Fig. 1.
Fig. 3 is a main-scanning cross sectional view showing the structure of the exposure unit which is disposed in the image forming apparatus which is shown in Fig. 1.
Fig. 4 is a block diagram showing the structures of the exposure unit and an exposure controller of the image forming apparatus which is shown in Fig. 1.
Fig. 5 is a flow chart of a startup process which is executed in the image forming apparatus which is shown in Fig. 1.
Fig. 6 is a timing chart of the startup process and a printing process.
Fig. 7 is a flow chart of an amplitude ensuring process.
Fig. 8 is a block diagram which shows the structures of the exposure unit and the exposure controller of the image forming apparatus according to a second embodiment of the present invention.
Fig. 9 is a timing chart of the startup process and the printing process in the second embodiment.
Fig. 10 is a flow chart of the amplitude ensuring process in the second embodiment.
Fig. 11 is a block diagram which shows the structures of the exposure unit and the exposure controller of the image forming apparatus according to a third embodiment of the present invention.
Fig. 12 is a flow chart of the amplitude ensuring process in the third embodiment.
Fig. 13 is a timing chart of the startup process and the printing process of the apparatus of immediately after power-on in the third embodiment.
Fig. 14 is a timing chart of the startup process and the printing process of the apparatus in operation in the third embodiment.
Fig. 15 is a flow chart showing a fourth embodiment of the present invention.
Fig. 16 is a block diagram which shows the structures of the exposure unit and the exposure controller of the image forming apparatus according to a fifth embodiment of the present invention.
Fig. 17 is a flow chart of the amplitude ensuring process performed in the apparatus which is shown in Fig. 16.
Fig. 18 is a flow chart of the startup process of a variation to the embodiments of the present invention.
Fig. 19 is a timing chart of the startup process and the printing process of the variation of Fig. 18 applied to the first embodiment.
Fig. 20 is a timing chart of the startup process and the printing process of the variation of Fig. 18 applied to the second embodiment.

Fig. 21 is a timing chart of the startup process and the printing process of the variation of Fig. 18 applied to the third embodiment.

Fig. 22 is a main-scanning cross sectional view showing the structure of the exposure unit of other embodiment of the present invention.

DETAILED DESCRIPTION OF THE PREFERRED EMBODIMENTS

<FIRST EMBODIMENT>

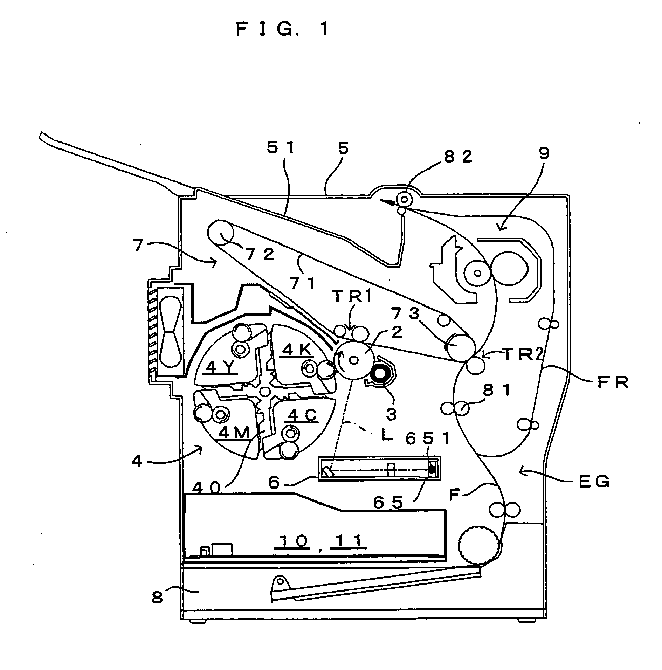

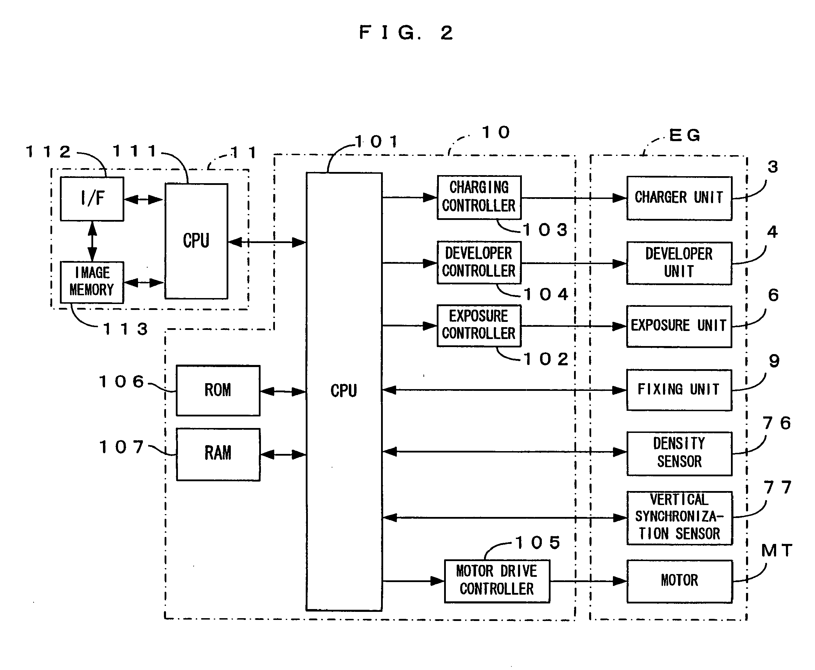

Fig. 1 is a drawing which shows a first embodiment of an image forming apparatus according to the present invention. Fig. 2 is a block diagram which shows the electric structure of the image forming apparatus which is shown in Fig. 1. This image forming apparatus is a color printer of the so-called 4-cycle type. In this image forming apparatus, when a print command is fed to a main controller 11 from an external apparatus such as a host computer in response to a user's image formation request, an engine controller 10 controls respective portions of an engine part EG in accordance with the print command received from the main controller 11 of a CPU 111, and an image which corresponds to the print command is formed on a sheet which may be a copy paper, a transfer paper, a general paper or a transparency for an overhead projector.

In the engine part EG, a photosensitive member 2 (which corresponds to the "latent image carrier" of the present invention) is disposed so that the photosensitive member 2 can freely rotate in an arrow direction (sub scanning direction) shown in Fig. 1. The photosensitive member 2 is linked to the rotation shaft of a motor MT (Fig. 2) which corresponds to the "carrier driver" of the present invention, and as the motor MT operates in response to a control command from a motor drive controller 105, the photosensitive member 2 rotates under the rotation drive force exerted by the motor MT. Further, around the photosensitive member 2, a charger unit 3, a rotary developer unit 4 and a cleaner (not shown) are disposed along the direction in which the photosensitive member 2 rotates. A charging controller 103 is electrically connected with the charger unit 3, for application of a predetermined charging bias upon the charger unit 3. The bias application uniformly charges an outer circumferential surface of the photosensitive member 2 to a predetermined surface potential. The photosensitive member 2, the charger unit 3 and the cleaner form one integrated photosensitive member cartridge which can be freely attached to and detached from an apparatus main body 5 as one integrated unit.

An exposure unit 6 emits a light beam L toward the outer circumferential surface of the photosensitive member 2 thus charged by the charger unit 3. The exposure unit 6 attains exposure with the light beam L of the surface of the photosensitive member 2 in accordance with an image signal, whereby an electrostatic latent image corresponding to the image signal is formed. The structure and operation of the exposure unit 6 will be described in detail later.

The developer unit 4 develops thus formed electrostatic latent image with toner. In other words, in this embodiment, the developer unit 4 comprises a support frame 40 which is axially disposed for free rotations, and also a yellow developer 4Y, a magenta developer 4M, a cyan developer 4C and a black developer 4K which house toner of the respective colors and are formed as cartridges which are freely attachable to and detachable from the support frame 40. As the developer unit 4 is driven into rotations in response to a control command given from a developer controller 104 of the engine controller 10 and the developers 4Y, 4C, 4M and 4K are selectively positioned at a predetermined developing position which abuts on the photosensitive member 2 or is faced with the photosensitive member 2 over a predetermined gap, toner of the color corresponding to the selected developer is supplied onto the surface of the photosensitive member 2 by a developer roller which carries the toner of the selected color. In consequence, the electrostatic latent image on the photosensitive member 2 is visualized in the selected toner color.

A toner image developed by the developer unit 4 in the manner above is primarily transferred onto an intermediate transfer belt 71 of a transfer unit 7 in a primary transfer region TR1. The transfer unit 7 comprises the intermediate transfer belt 71 which runs across a plurality of rollers 72, 73, etc., and a driver (not shown) which drives the roller 73 into rotations to thereby revolve the intermediate transfer belt 71 in a predetermined revolving direction.

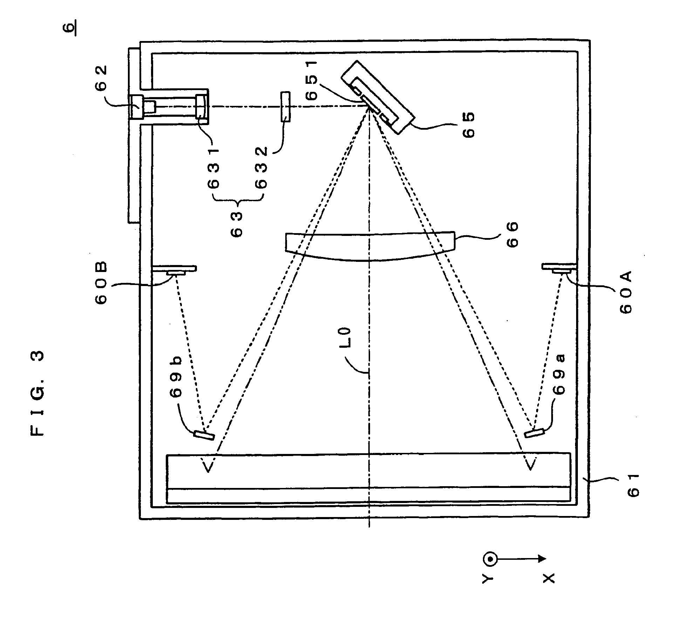

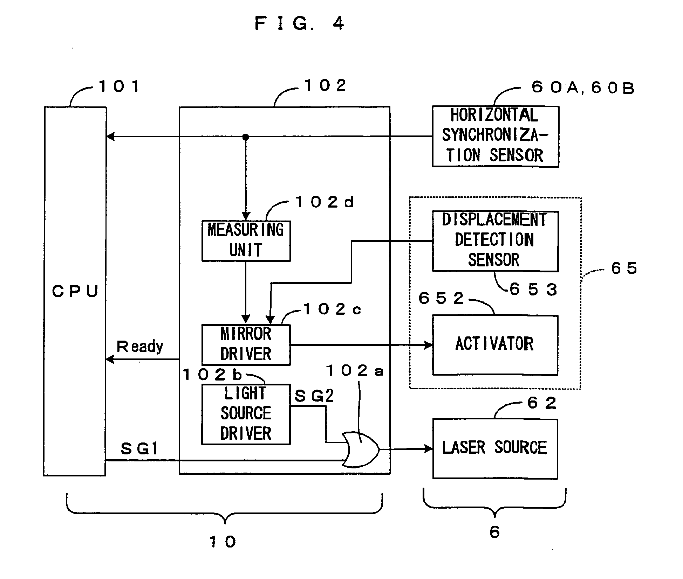

Further, there are a transfer belt cleaner (not shown), a density sensor 76 (Fig. 2) and a vertical synchronization sensor 77 (Fig. 2) in the vicinity of the roller 72. Of these, the density sensor 76 is disposed facing a surface of the intermediate transfer belt 71 and measures an image density of a patch image formed on an outer circumferential surface of the intermediate transfer belt 71. Meanwhile, the vertical synchronization sensor 77 is a sensor which detects a reference position of the intermediate transfer belt 71, and serves as a vertical synchronization sensor for obtaining a synchronizing signal which is output in relation to revolution of the intermediate transfer belt 71 in the sub scanning direction, namely, a vertical synchronizing signal Vsync. In this apparatus, for the purpose of aligning the timing at which the respective portions operate and accurately overlaying toner images of the respective colors on top of each other, the operation of the respective portions of the apparatus is controlled based on the vertical synchronizing signal Vsync and a horizontal synchronization sensor (Figs. 3 and 4) which will be described later.

For transfer of a color image onto a sheet, the toner images of the respective colors formed on the photosensitive member 2 are overlaid each other on the intermediate transfer belt 71, thereby forming a color image which will then be secondarily transferred onto a sheet taken out one by one from a cassette 8 and transported along a transportation path F to a secondary transfer region TR2.

At this stage, in order to properly transfer the images carried by the intermediate transfer belt 71 onto a sheet at a predetermined position, the timing of feeding the sheet to the secondary transfer region TR2 is controlled. To be specific, there is a gate roller 81 disposed in front of the secondary transfer region TR2 on the transportation path F, and as the gate roller 81 rotates in synchronization to the timing of revolution of the intermediate transfer belt 71, the sheet is fed into the secondary transfer region TR2 at predetermined timing.

Further, the sheet now bearing the color image is transported to a discharge tray part 51, which is disposed to a top surface portion of the apparatus main body 5, through a fixing unit 9 and a discharge roller 82. When images are to be formed on the both surfaces of a sheet, the discharge roller 82 moves the sheet seating an image on its one surface in the manner above in a switch back motion. The sheet is therefore transported along a reverse transportation path FR. While the sheet is returned back to the transportation path F again before arriving at the gate roller 81, the surface of the sheet which abuts on the intermediate transfer belt 71 in the secondary transfer region TR2 and is to receive a transferred image is, at this stage, the opposite surface to the surface which already bears the image. In this fashion, it is possible to form images on the both surfaces of the sheet.

In Fig. 2, denoted at 113 is an image memory disposed in the main controller 11 for storage of image data fed from an external apparatus such as a host computer via an interface 112. Denoted at 106 is a ROM which stores a computation program executed by a CPU 101, control data for control of the engine part EG, etc. Denoted at 107 is a RAM which temporarily stores a computation result derived by the CPU 101, other data, etc.

Fig. 3 is a main-scanning cross sectional view showing the structure of the exposure unit which is disposed in the image forming apparatus which is shown in Fig. 1, and Fig. 4 is a block diagram showing the structures of the exposure unit and an exposure controller of the image forming apparatus which is shown in Fig. 1. The structure and operation of the exposure unit will now be described in detail with reference to these drawings.

The exposure unit 6 comprises an exposure housing 61. A single laser source 62 is fixed to the exposure housing 61, permitting emission of a light beam from the laser source 62. The laser source 62 is electrically connected with a light source driver 102b of an exposure controller 102 and the CPU 101 via an OR circuit 102a. In other words, the OR circuit 102a receives, at its input terminals, an image signal SG1 from the CPU 101 and a light source drive signal SG2 suitable to the startup process which will be described later from the light source driver 102b, and OR of the signals SG1 and SG2 is output to the laser source 62 from an output terminal of the OR circuit 102a. Hence, as the light source drive signal SG2 is output to the laser source 62 from the light source driver 102b, the laser source 62 is turned on based on this. Meanwhile, for execution of printing process, when image signal SG1 is output to the laser source 62, ON/OFF of the laser source 62 is controlled based on this and the laser source 62 emits the light beam which is modulated in accordance with the image signal SG1.

To make the light beam from the laser source 62 scan and expose the surface (not shown) of the photosensitive member 2, a collimator lens 631, a cylindrical lens 632, a deflector 65 and a scanning lens 66 are disposed inside the exposure housing 61. In other words, after shaped into collimated light of a proper size by the collimator lens 631, the light beam from the laser source 62 impinges upon the cylindrical lens 632 which has power only in the sub scanning direction Y As the cylindrical lens 632 is adjusted, the collimated light is imaged in the vicinity of a deflection mirror surface 651 of the deflector 65 in the sub scanning direction Y In this embodiment, the collimator lens 631 and the cylindrical lens 632 thus function as a beam shaping system 63 which shapes the light beam from the laser source 62.

The deflector 65 is made using a micro machining technique which is an application of semiconductor manufacturing techniques and which aims at forming an integrated micro machine on a semiconductor substrate, and therefore, the deflector 65 is capable of deflecting a light beam reflected by the resonating deflection mirror surface 651 in the main scanning direction X. To be more specific, the deflection mirror surface 651 is axially supported so that the deflection mirror surface 651 can freely pivot about a pivot axis which is approximately orthogonal to the main scanning direction X, and the deflection mirror surface 651 pivots about the pivot axis in accordance with external force applied from an activator 652. Based on a mirror drive signal from a mirror driver 102c of the exposure controller 102, the activator 652 exerts electrostatic, electromagnetic or mechanical external force upon the deflection mirror surface 651 and makes the deflection mirror surface 651 pivot at the frequency of the mirror drive signal. The drive provided by the activator 652 may be one which utilizes electrostatic absorption, electromagnetic force or mechanical force, each driving method of which is already known and will not be described here.

The deflector 65 which is driven in this fashion comprises a displacement detection sensor 653 as that described in Japanese Patent Application Laid-Open Gazette No. H7-218857 which can detect the amount of displacement of the deflection mirror surface 651. The displacement detection sensor 653 outputs a signal corresponding to the amount of displacement of the deflection mirror surface 651 to the mirror driver 102c, whereby the mirror driver 102c realizes feedback control regarding the deflection mirror surface 651.

The mirror driver 102c is so structured as to change to set a drive condition such as the frequency, the voltage, and the like of the mirror drive signal. Hence, when the frequency of the mirror drive signal is matched with the characteristic resonant frequency of the deflector 65, the deflection mirror surface 651 resonates and a large amplitude is obtained. Further, a change of the voltage of the mirror drive signal makes it possible to adjust the amplitude value.

The deflection mirror surface 651 of the deflector 65 deflects the light beam toward the scanning lens 66. In this embodiment, the scanning lens 66 has such a structure that its F value remains approximately unchanged all over an effective scanning area on the surface of the photosensitive member 2. The light beam deflected toward the scanning lens 66 is therefore imaged through the scanning lens 66 in a spot diameter which stays approximately unchanged in the effective scanning area on the surface of the photosensitive member 2. The light beam thus scans parallel to the main scanning direction X and a latent image shaped as a line which elongates along the main scanning direction X is formed on the surface of the photosensitive member 2.

Further, in this embodiment, as shown in Fig. 3, at the start and end of the scanning path of the scanning light beam, return mirrors 69a and 69b guide the scanning light beam to horizontal synchronization sensors 60A and 60B (which correspond to the "optical detection sensor" of the present invention). The return mirrors 69a and 69b and the horizontal synchronization sensors 60A and 60B are disposed outside a sweep area which is created as the light beam scans and sweeps the effective scanning area. In addition, the return mirrors 69a and 69b are disposed approximately symmetrical with respect to an optical axis along which the light beam scans an approximate center of the effective scanning area. It is therefore considered that the horizontal synchronization sensors 60A and 60B are disposed approximately symmetrical with respect to the optical axis.

Detection signals regarding the scanning light beam available from the horizontal synchronization sensors 60A and 60B are transmitted to a measuring unit 102d of the exposure controller 102, and the measuring unit calculates a scanning time in which the light beam scans the effective scanning area. The scanning time calculated by the measuring unit 102d is transmitted to the mirror driver 102c, and in accordance with the transmitted scanning time, the mirror driver 102c is capable of changing and setting the drive condition of the mirror drive signal which drives the deflection mirror surface 651. In addition, in this embodiment, the horizontal synchronization sensors 60A and 60B function as a horizontal synchronization reading sensor which is for obtaining a synchronizing signal based on which the light beam scans the effective scanning area along the main scanning direction X, namely, a horizontal synchronizing signal Hsync.

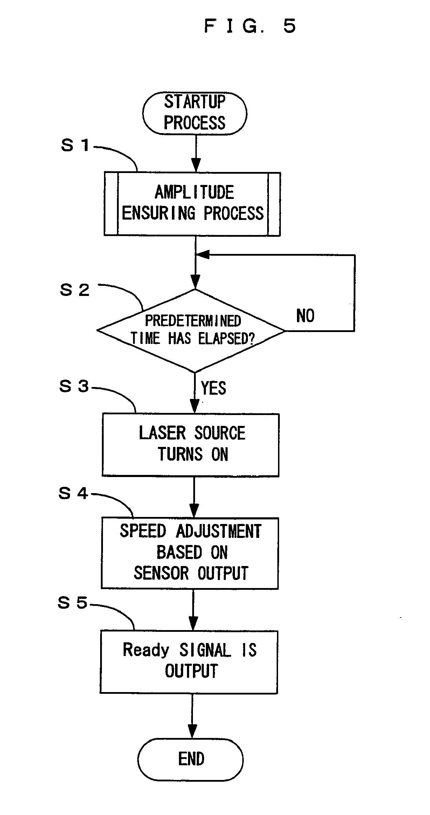

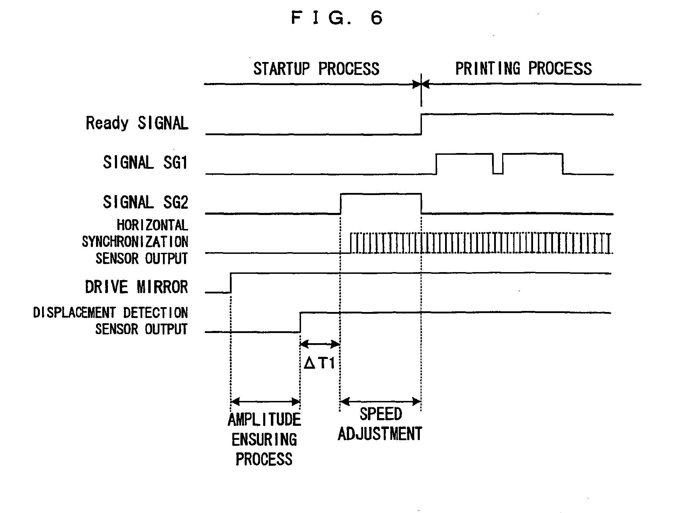

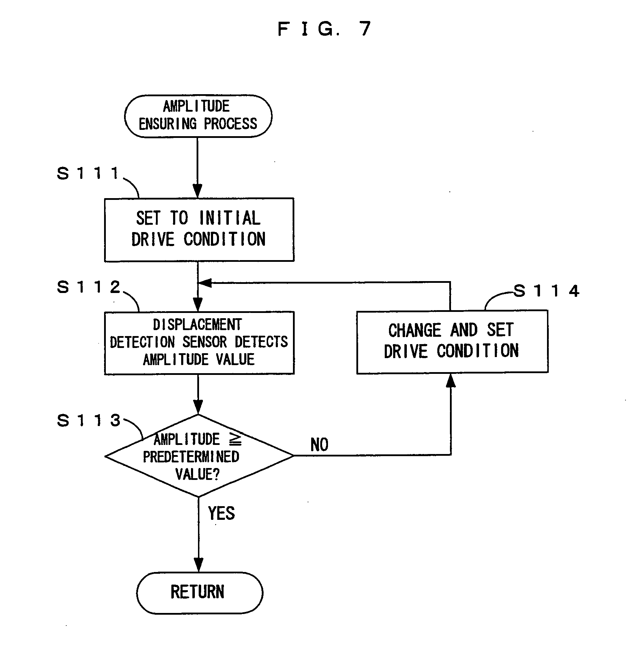

The startup process in the image forming apparatus which has the above structure will now be described with reference to Figs. 5 through 7. In the image forming apparatus, the startup process is executed upon power-on, prior to printing, etc. Fig. 5 is a flow chart of the startup process which is executed in the image forming apparatus which is shown in Fig. 1. Fig. 6 is a timing chart of the startup process and printing process. Fig. 7 is a flow chart of amplitude ensuring process. During the startup process, before turning on the laser source, the deflection mirror surface 651 of the deflector 65 executes the amplitude ensuring process (Step S1), thereby resonating the deflection mirror surface 651 at or over a minimum amplitude value.

During the amplitude ensuring process, as shown in Figs. 6 and 7, the mirror driver 102c initially sets the drive condition such as the frequency and the voltage of the mirror drive signal based on an initial drive condition which is stored in the ROM 106 (Step S111). Under the initial drive condition, the deflection mirror surface 651 starts oscillating. While the initial drive condition for the deflector 65 is stored in the ROM 106 in this embodiment, the mirror driver 102c may comprise a storage unit which stores the initial drive condition.

After driving of the deflection mirror surface 651 has started, the displacement detection sensor 653 detects the amount of displacement of the deflection mirror surface 651 and the amplitude value of the deflector 65 is calculated (Step S112), and whether or not this detected value is not less than a predetermined value, namely, a minimum amplitude value is determined (Step S113). The "minimum amplitude value" is the amplitude value of the deflection mirror surface 651 which is necessary for the light beam deflected by the deflection mirror surface 651 to move past the horizontal synchronization sensors 60A and 60B. Hence, if the laser source 62 is turned on while the detected value does not reach the minimum amplitude value at Step S113, the horizontal synchronization sensors 60A and 60B can not detect the light beam. This creates a problem that the light beam having a narrow scanning width is irradiated in concentration upon a certain portion of the photosensitive member 2 and the photosensitive member 2 is therefore degraded or that control based on the horizontal synchronizing signal Hsync becomes impossible.

Consequently, detection of the amplitude value (Step S112) and determination of the amplitude (Step S113) are repeated while changing the drive condition regarding the deflection mirror surface 651 (Step S114) until the amplitude value of the deflector 65 becomes not less than the minimum amplitude value. This permits the deflector 65 resonate at or over the minimum amplitude value while maintaining the laser source 62 turned off. When the amplitude value does not reach the minimum amplitude value even though the drive condition has been changed considerably, since a possibility is that the deflector 65 is malfunctioning, the startup process may be interrupted and an error message may be displayed. In this manner, a trouble in the apparatus is detected without fail.

Further, in this embodiment, since the deflection mirror surface 651 starts oscillating in accordance with the initial drive condition, the following effect is promised. That is, the resonant frequency of the deflector 65 could change because of an external factor such as an environment of use, a difference among individual deflectors, etc. However, an initial drive condition suitable to the deflector 65 is stored in a storage unit such as the ROM 106 and the memory of the mirror driver 102c and the drive condition for the deflector 65 during the amplitude ensuring process is set to the initial drive condition at the start of oscillations in this embodiment. This makes the deflection mirror surface 651 resonate without fail when starting to oscillate, whereby the amplitude value of the deflector 65 becomes equal to or larger than the minimum amplitude value or reaches a neighboring value at the start of oscillations of the deflector 65 and the amplitude ensuring process (Step S1) completes in a short period of time.

Once the deflector 65 has started resonating at or over the minimum amplitude value, after a predetermined period $\Delta T1$ (Step S2), the light source drive signal SG2 from the light source driver 102b is output to the laser source 62 and the laser source 62 is turned on (Step S3) as shown in Figs. 5 and 6. Since the deflector 65 is already resonating, the light beam scans on the surface of the photosensitive member 2 and concentrated irradiation of the light beam upon a certain portion of the photosensitive member 2 is prevented. Further, simultaneously to scanning with the light beam, the horizontal synchronization sensors 60A and 60B output the horizontal synchronizing signal Hsync. At the next Step S4 therefore, the drive condition for the deflector 65 is controlled based on the sensor outputs, to thereby adjust the speed of the scanning light beam. It is thus possible to ensure that the scanning light beam scans in a stable fashion.

Upon stabilization of the scanning speed, the laser source 62 is turned off, and at Step S5, Ready signal is output to the CPU 101 and the startup process is terminated. The CPU 101, receiving Ready signal, executes the printing process in accordance with the print command.

As described above, in this embodiment, the amplitude ensuring process (Step S1) is executed prior to turning on of the laser source 62, and the amplitude value of the deflector 65 is consequently set to the minimum amplitude value or larger. Since the laser source 62 is turned on after this, the light beam scans moving past at least the horizontal synchronization sensors 60A and 60B upon turning on of the laser source 62. This prevents concentration of the light beam upon a certain portion of the photosensitive member 2, and hence, securely obviates deterioration of the photosensitive member 2. In addition, as the scanning light beam moves past the horizontal synchronization sensors 60A and 60B, the horizontal synchronization sensors 60A and 60B output the horizontal synchronizing signal Hsync without fail. It is thus possible to adjust the scanning speed of the light beam favorably and highly accurately based on the signal Hsync.

Further, since the displacement detection sensor 653 is disposed in this embodiment, the scanning speed of the light beam may be adjusted based on the output signal from the sensor 653. However, use of the outputs from the horizontal synchronization sensors 60A and 60B attains a higher accuracy than that achieved through adjustment by the sensor 653.

Still further, since this embodiment uses the light source driver 102b which is solely for the startup process, the control is simple. In other words, an image signal suitable to the startup process may be fed from the CPU 101 to the laser source 62, in which case the light source driver 102b is unnecessary. However, since the image signal is fed directly from an external apparatus or created based on a print command which is fed from an external apparatus in this type of image forming apparatus, it is necessary to create an adjustment image signal while communicating with the external apparatus. The necessity of creating the special image signal (adjustment image signal) which is for adjustment of the drive condition complicates control of telecommunications between this image forming apparatus and the external apparatus which is connected with the image forming apparatus. On the contrary, this problem is solved by insertion of the light source driver 102b dedicated to control of the light source for adjustment of the drive condition for the deflector 65.

<SECOND EMBODIMENT>

In the image forming apparatus according to a second embodiment, a storage unit is disposed which stores an initial drive condition corresponding to the deflector. The deflector resonates based on the initial drive condition stored in advance in the storage unit prior to turning on of the laser source, and the amplitude value of the deflector is set to the minimum amplitude value or larger. The laser source is turned on after this. These are the major differences from the first embodiment, and the structure and operation of the second embodiment are otherwise the same as those of the first embodiment. The major differences will now be mainly described, and the same structure and operation will not be described again but will be denoted at the same reference symbols.

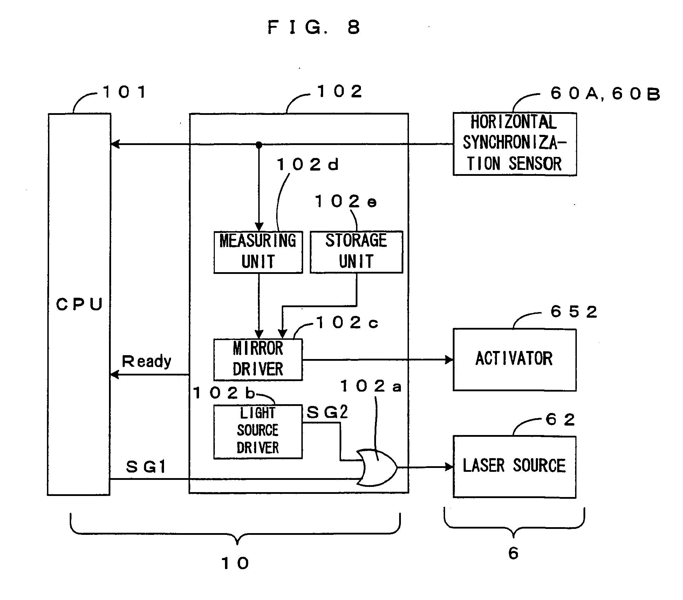

Fig. 8 is a block diagram which shows the structures of the exposure unit and the exposure controller of the image forming apparatus according to the second embodiment. In this embodiment, a storage unit 102e is disposed in the exposure controller 102 and an initial drive condition (such as a drive frequency and a drive voltage) corresponding to the deflector 65 is stored in the storage unit 102e in advance. As described later, for execution of the amplitude ensuring process, the initial drive condition is read out from the storage unit 102e so that the deflector 65 resonates.

In this image forming apparatus as well, the startup process is executed upon power-on, prior to printing, etc., as in the first embodiment. However, in the second embodiment, amplitude ensuring process (Step S1 Fig. 5) which is different from that in the first embodiment is executed before the laser source is turned on, whereby the deflection mirror surface 651 of the deflector 65 resonates in an amplitude not less than the minimum amplitude value.

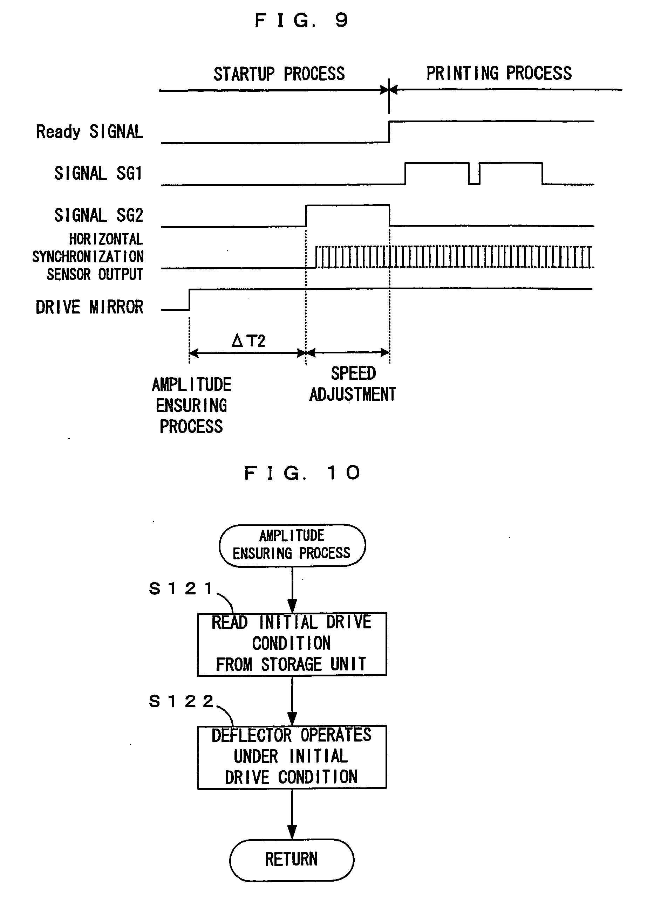

During this amplitude ensuring process, as shown in Figs. 9 and 10, the initial drive condition is read out from the storage unit 102e (Step S121), and the mirror driver 102c initially sets the drive condition such as the frequency, the voltage, and the like of the mirror drive signal based on the initial drive condition. Then, under this initial drive condition, the oscillation of the deflection mirror surface 651 is started (Step S122). The initial drive condition is set in advance corresponding to the deflector 65 as described above. Hence, thus driven deflector 65 resonates without fail at or over the minimum amplitude value, namely, the amplitude value of the deflection mirror surface 651 which is needed for the light beam deflected by the deflection mirror surface 651 to move past the horizontal synchronization sensors 60A and 60B.

Once the deflector 65 has started resonating in an amplitude not less than the minimum amplitude value in this manner, as shown in Fig. 9, after the predetermined period ΔT2, the light source drive signal SG2 from the light source driver 102b is output to the laser source 62 and the laser source 62 is turned on (Steps S2 and S3 in Fig. 5). Since the deflector 65 is already resonating, the light beam scans on the surface of the photosensitive member 2 and concentrated irradiation of the light beam upon a certain portion of the photosensitive member 2 is prevented. Further, simultaneously to scanning with the light beam, the horizontal synchronization sensors 60A and 60B output the horizontal synchronizing signal Hsync. Therefore, next, the drive condition for the deflector 65 is controlled based on the outputs of the sensors, to thereby adjust the speed of the scanning light beam (Step S4 in Fig. 5). It is thus possible to ensure that the scanning light beam scans in a stable fashion.

Upon stabilization of the scanning speed, the laser source 62 is turned off, and then, Ready signal is output to the CPU 101 and the startup process is terminated (Step S5 in Fig. 5). The CPU 101, receiving Ready signal, executes the printing process in accordance with the print command.

As described above, in this embodiment, the amplitude ensuring process (Step S1) is executed prior to turning on of the laser source 62, and the amplitude value of the deflector 65 is consequently set to the minimum amplitude value or larger. Further, the deflector 65 resonates based on the initial drive condition (such as a drive frequency and a drive voltage) which corresponds to the deflector 65 and is stored in advance in the storage unit 102e in this embodiment. In other words, the initial drive condition is a drive condition such as the drive frequency and the drive voltage which are necessary to make the deflector 65 resonate at or over the minimum amplitude value. Hence, operating in accordance with the initial drive condition, the deflector 65 resonates without fail at or over the minimum amplitude value even when the light source is off. The laser source 62 thereafter turns on, and therefore, the light beam is already scanning at the time of turning on of the laser source 62, moving past at least the horizontal synchronization sensors 60A and 60B. This prevents concentration of the light beam upon a certain portion of the photosensitive member 2, and hence, securely obviates deterioration of the photosensitive member 2. In addition, as the scanning light beam moves past the horizontal synchronization sensors 60A and 60B, the horizontal synchronization sensors 60A and 60B output the horizontal synchronizing signal Hsync without fail. It is thus possible to adjust the scanning speed of the light beam favorably and highly accurately based on the signal Hsync.

Further, since this embodiment uses the light source driver 102b which is solely for the startup process, the control is simple. In other words, an image signal suitable to the startup process may be fed from the CPU 101 to the laser source 62, in which case the light source driver 102b is unnecessary. However, since the image signal is fed directly from an external apparatus or created based on a print command which is fed from an external apparatus in this type of image forming apparatus, it is necessary to create an adjustment image signal while communicating with the external apparatus. The necessity of creating the special image signal (adjustment image signal) which is for adjustment of the drive condition complicates control of telecommunications between this image forming apparatus and the external apparatus which is connected with the image forming apparatus. On the contrary, this problem is solved by insertion of the light source driver 102b dedicated to control of the light source for adjustment of the drive condition for the deflector 65.

<THIRD EMBODIMENT>

In the image forming apparatus according to a third embodiment, the deflector resonates based on an initial drive condition corresponding to an operating status of the apparatus prior to turning on of the laser source, and the amplitude value of the deflector is consequently set to the minimum amplitude value or larger. The laser source turns on after this. These are the major differences from the first embodiment, and the structure and operation of the third embodiment are otherwise the same as those of the first embodiment. The major differences will now be mainly described, and the same structure and operation will not be described again but will be denoted at the same reference symbols.

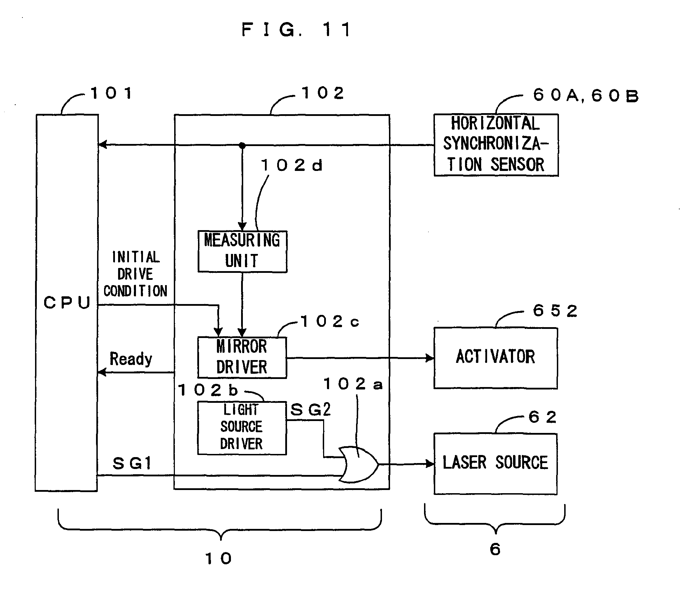

Fig. 11 is a block diagram which shows the structures of the exposure unit and the exposure controller of the image forming apparatus according to the third embodiment. In this embodiment, as initial drive conditions (such as the drive frequency and the drive voltage) for the deflector 65, a first drive condition for the deflector 65 which is suitable to power-on of the apparatus and a second drive condition for the deflector 65 which is suitable when the apparatus is in operation are stored in the ROM 106 in advance. At execution of the amplitude ensuring process, the initial drive condition corresponding to the operating status of the apparatus is read out from the ROM 106 and the deflector 65 resonates as described later. Of course, the exposure controller 102 may comprise a storage unit which stores the initial drive conditions, although the foregoing has described that the initial drive conditions for the deflector 65 are stored in the ROM 106.

In this image forming apparatus as well, the startup process is executed upon power-on, prior to printing, etc., as in the first embodiment. However, in the third embodiment, amplitude ensuring process (Step S1 in Fig. 5) which is different from that in the first embodiment is executed before the laser source is turned on, whereby the deflection mirror surface 651 of the deflector 65 resonates at or over the minimum amplitude value.

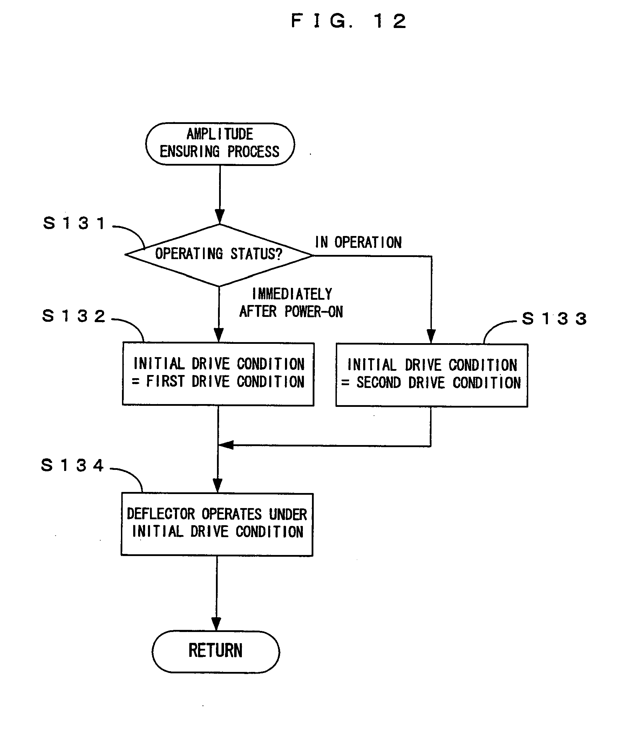

In the amplitude ensuring process of this embodiment, as shown in Fig. 12, the operating status of the apparatus is examined. To be more specific, whether the apparatus is immediately after power-on or in operation is determined (Step S131). When the apparatus is immediately after power-on, the first drive condition is read out from the ROM 106 as the initial drive condition (Step S132). On the other hand, when the apparatus is in operation, the second drive condition is read out from the ROM 106 as the initial drive condition (Step S133). Based on the initial drive condition thus read out in accordance with the operating status of the apparatus, the mirror driver 102c initially sets the drive condition such as the frequency, the voltage, and the like of the mirror drive signal. Then, the oscillation of the deflection mirror surface 651 is started under this initial drive condition (Step S134). The initial drive condition is set in advance in accordance with the operating status of the apparatus as described above. Hence, the deflector 65 driven in this manner resonates without fail at or over the minimum amplitude value, namely, the amplitude value of the deflection mirror surface 651 which is needed for the light beam deflected by the deflection mirror surface 651 to move past the horizontal synchronization sensors 60A and 60B.

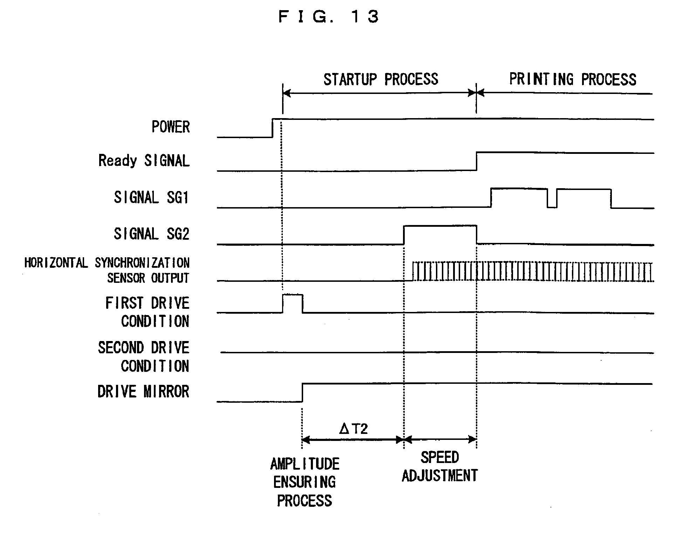

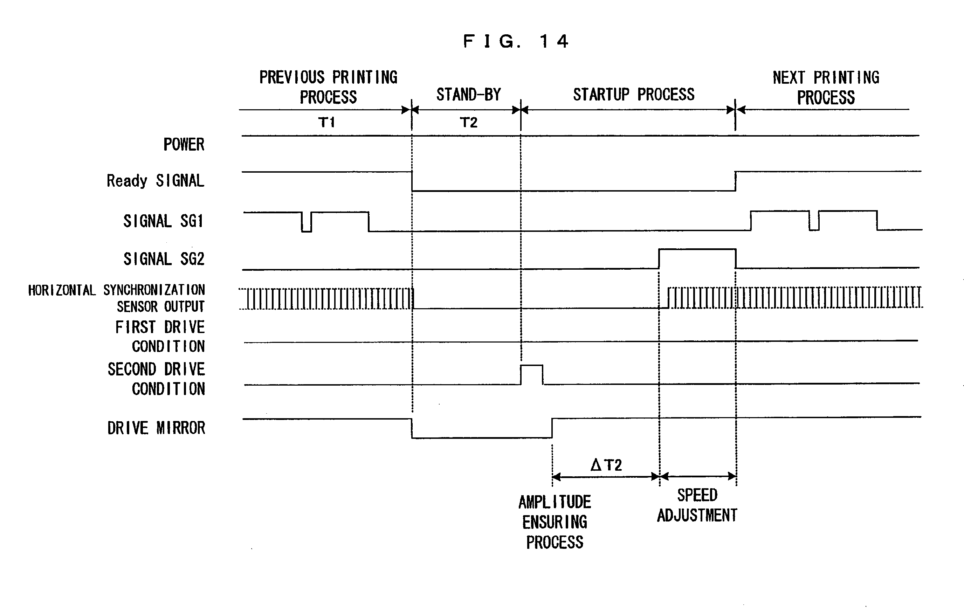

Once the deflector 65 has started resonating in an amplitude not less than the minimum amplitude value in this manner, as shown in Figs. 13 and 14, after the predetermined period ΔT2, the light source drive signal SG2 from the light source driver 102b is output to the laser source 62 and the laser source 62 is turned on (Steps S2 and S3 in Fig. 5). Since the deflector 65 is already resonating, the light beam scans on the surface of the photosensitive member 2 and concentrated irradiation of the light beam upon a certain portion of the photosensitive member 2 is prevented. Further, simultaneously to scanning with the light beam, the horizontal synchronization sensors 60A and 60B output the horizontal synchronizing signal Hsync. Therefore, next, the drive condition for the deflector 65 is controlled based on the sensor outputs, to thereby adjust the speed of the scanning light beam (Step S4 in Fig. 5). It is thus possible to ensure that the scanning light beam scans in a stable fashion.

Upon stabilization of the scanning speed, the laser source 62 is turned off, and then, Ready signal is output to the CPU 101 and the startup process is terminated (Step S5 in Fig. 5). The CPU 101, receiving Ready signal, executes the printing process in accordance with the print command.

As described above, in this embodiment, the amplitude ensuring process (Step S1 in Fig. 5) is executed prior to turning on of the laser source 62, and the amplitude value of the deflector 65 is consequently set to the minimum amplitude value or larger. Further, in this embodiment, the ROM 106 stores in advance (1) the first drive condition for the deflector 65 which is suitable to power-on of the apparatus and (2) the second drive condition for the deflector 65 which is suitable when the apparatus is in operation, and the deflector 65 resonates in accordance with the initial drive condition (e.g., the drive frequency, the drive voltage) corresponding to the operating status of the apparatus. Hence, operating under this initial drive condition, the deflector 65 resonates without fail at or over the minimum amplitude value even when the light source is off and independently of an environment in which the deflector 65 is used associated with whether the apparatus is immediately after power-on or in operation. The laser source 62 thereafter turns on, and therefore, the light beam is already scanning at the time of turning on of the laser source 62, moving past at least the horizontal synchronization sensors 60A and 60B. This prevents concentration of the light beam upon a certain portion of the photosensitive member 2, and hence, securely obviates deterioration of the photosensitive member 2. In addition, as the scanning light beam moves past the horizontal synchronization sensors 60A and 60B, the horizontal synchronization sensors 60A and 60B output the horizontal synchronizing signal Hsync without fail. It is thus possible to adjust the scanning speed of the light beam favorably and highly accurately based on the signal Hsync.

Further, since this embodiment uses the light source driver 102b which is solely for the startup process, the control is simple. In other words, an image signal suitable to the startup process may be fed from the CPU 101 to the laser source 62, in which case the light source driver 102b is unnecessary. However, since the image signal is fed directly from an external apparatus or created based on a print command which is fed from an external apparatus in this type of image forming apparatus, it is necessary to create an adjustment image signal while communicating with the external apparatus. The necessity of creating the special image signal (adjustment image signal) which is for adjustment of the drive condition complicates control of telecommunications between this image forming apparatus and the external apparatus which is connected with the image forming apparatus. On the contrary, this problem is solved by insertion of the light source driver 102b dedicated to control of the light source for adjustment of the drive condition for the deflector 65.

<FOURTH EMBODIMENT>

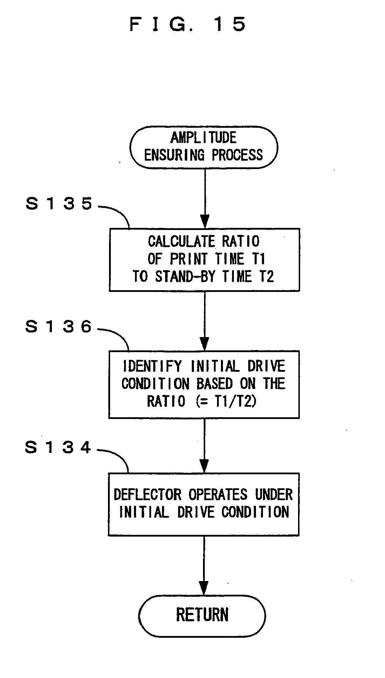

Although the operating status of the apparatus is judged with reference to power-on and the initial drive condition which reflects the judgment is set in the third embodiment above, the operating status of the apparatus may be determined based on other criterion. For instance, in the image forming apparatus, as shown in Fig. 14, after completion of the previous printing process (which corresponds to the "previous image formation" of the present invention), the deflector 65 stops oscillating and stands by as it is in a halt. As the next print command is provided, after the startup process is executed again, the next printing process is executed. Since a time T2 for a stand-by process varies depending upon the timing of the next print command, the environment in which the deflector 65 is used, a temperature in particular, may change in accordance with whether the stand-by time T2 is long or short. Noting this, the operating status of the apparatus may be estimated based on the relationship between a time T1 for the previous printing process and the stand-by time T2, and an initial drive condition corresponding to the operating status may be set as shown in Fig. 15 for example.

Fig. 15 is a flow chart showing a fourth embodiment of the present invention. In this embodiment, as a print command is fed during the stand-by process, after the startup process is executed, the printing process corresponding to this print command (which corresponds to the "next image formation" of the present invention) is carried out. In short, in this embodiment, how the resonant frequency of the deflector 65 will change as the ratio of the print time T1 to the stand-by time T2 changes is verified in advance, and initial drive conditions corresponding to various ratios (= T1/T2) are identified and stored in the storage unit such as the ROM 106. After the start of the startup process, the amplitude ensuring process (Step S1 in Fig. 5) shown in Fig. 15 is executed.

In this embodiment, the CPU 101 measures the print time T1 and the stand-by time T2, and the ratio of the print time T1 to the stand-by time T2 is calculated from the measurement result (Step S135). After identifying an initial drive condition corresponding to this ratio (Step S136), the mirror driver 102c initially sets the drive condition such as the frequency and the voltage of the mirror drive signal based on the initial drive condition. Then, the oscillation of the deflection mirror surface 651 is started under this initial drive condition (Step S 134). Hence, regardless of whether the stand-by process to the previous printing process is long or short, the deflector 65 thus driven again resonates without fail at or over the minimum amplitude value, namely, the amplitude value of the deflection mirror surface 651 which is needed for the light beam deflected by the deflection mirror surface 651 to move past the horizontal synchronization sensors 60A and 60B. After execution of the amplitude ensuring process shown in Fig. 15, the deflector 65 is adjusted and the printing process is performed as in the embodiment above.

As described above, in this embodiment, even when the environment in which the deflector 65 is used changes as oscillation is stopped after the previous printing process, the deflector 65 is driven again under an initial drive condition corresponding to the changed environment of use. That is, the deflector 65 resonates without fail at or over the minimum amplitude value independently of the environment of use of the deflector 65 associated with whether the stand-by time T2 is long or short, thereby achieving a similar effect to that according to the third embodiment.

Although the foregoing has described that the ratio (= T1/T2) is used as the relationship between the print time T1 and the stand-by time T2, other formula expressing the relationship such as the difference (= T1 - T2) between the two may be used instead. In effect, the drive condition for the deflector 65 corresponding to the relationship between the previous print time T1 and the stand-by time T2 may be set as the initial drive condition.

<FIFTH EMBODIMENT>

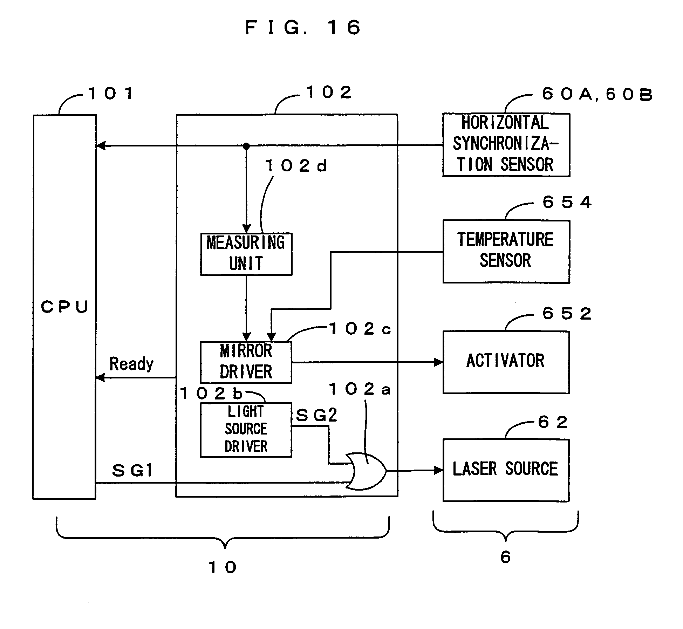

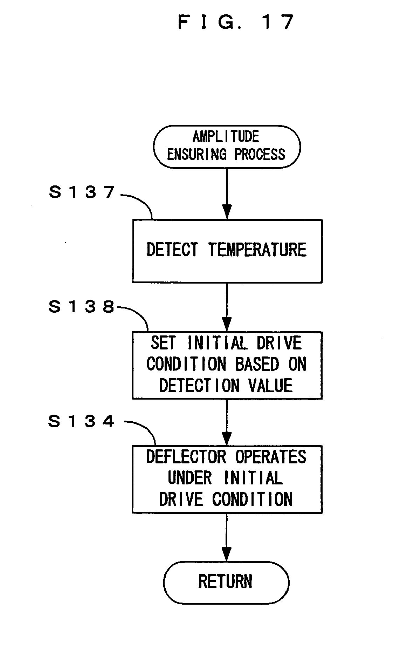

In the third embodiment described earlier, noting the environment in which the deflector 65 is used, in particular a temperature, an initial drive condition is set in accordance with a relationship related to the environment of use of the deflector 65, and the deflector 65 therefore resonates at or over the minimum amplitude value. It then follows that a temperature may be detected directly and the initial drive condition may be set in accordance with the result of the detection. This will now be described with reference to Figs. 16 and 17.

Fig. 16 is a block diagram which shows the structures of the exposure unit and the exposure controller of the image forming apparatus according to a fifth embodiment. Fig. 17 is a flow chart of the amplitude ensuring process performed in the apparatus which is shown in Fig. 16. A major difference of this embodiment from the embodiments above is that a temperature sensor (temperature detector) 654 is disposed which detects a temperature inside the apparatus and feeds the detection result to the mirror driver 102c and that the amplitude ensuring process is executed based on the detection result obtained by the temperature sensor 654. Other structures are approximately the same and therefore will not be described again but will be denoted at the same reference symbols.

In this embodiment, relationships between temperatures and the resonant frequency of the deflector 65 are verified in advance, and initial drive conditions corresponding to various temperatures are identified and stored in the storage unit such as the ROM 106. As the amplitude ensuring process is started, first, as shown in Fig. 17, the temperature sensor 654 detects a temperature inside the apparatus (Step S137). After an initial drive condition is identified based on the detection value (Step S138), the mirror driver 102c initially sets the drive condition such as the frequency, the voltage, and the like of the mirror drive signal based on this initial drive condition, and then, the oscillation of the deflection mirror surface 651 is started under this initial drive condition (Step S134). Hence, the deflector 65 is always driven under a proper initial drive condition even when the temperature inside the apparatus changes, and therefore, the deflector 65 resonates without fail at or over the minimum amplitude value, namely, the amplitude value of the deflection mirror surface 651 which is needed for the light beam deflected by the deflection mirror surface 651 to move past the horizontal synchronization sensors 60A and 60B. After execution of the amplitude ensuring process which is shown in Fig. 17, the deflector 65 is adjusted and the printing process is performed as in the third embodiment.

As described above, in this embodiment, since a temperature closely related to the resonant frequency of the deflector 65 is detected and the deflector 65 is driven based on an initial drive condition corresponding to the result of the detection, the deflector 65 oscillates always at or over the minimum amplitude value, thereby attaining a similar effect to those according to the embodiments above. As for the temperature, while detection of the temperature of the deflector 65 or a temperature around the deflector 65 is preferable, a temperature inside the exposure housing 61 in which the deflector 65 is disposed or a temperature around the fixing unit 9 which is one of heat sources of the apparatus may be detected instead.

<OTHERS>

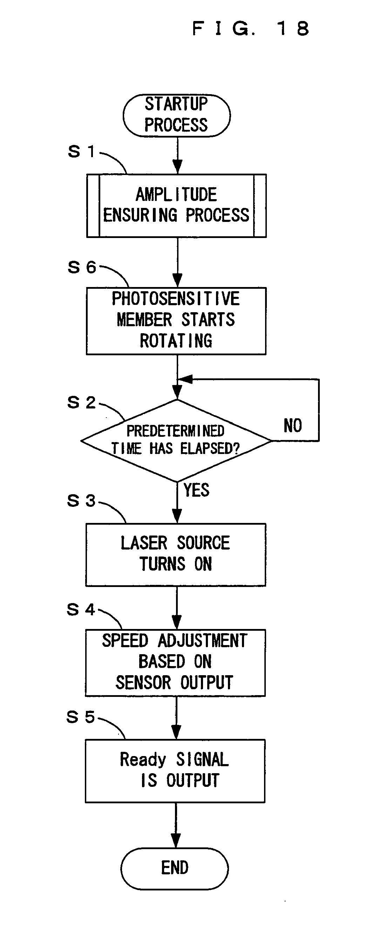

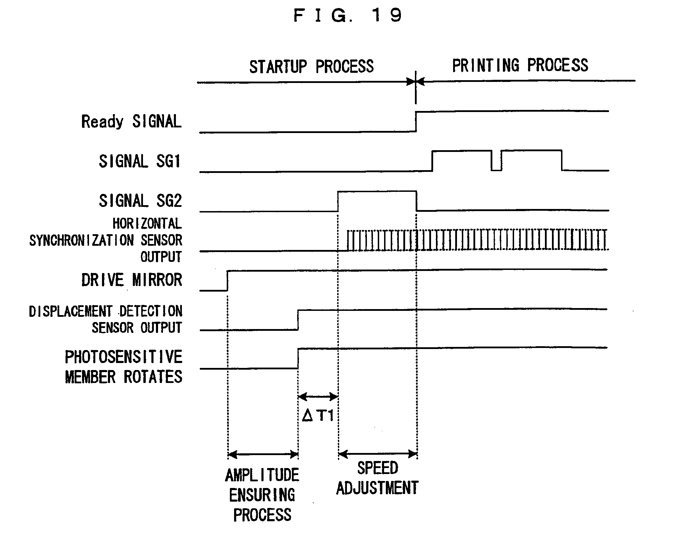

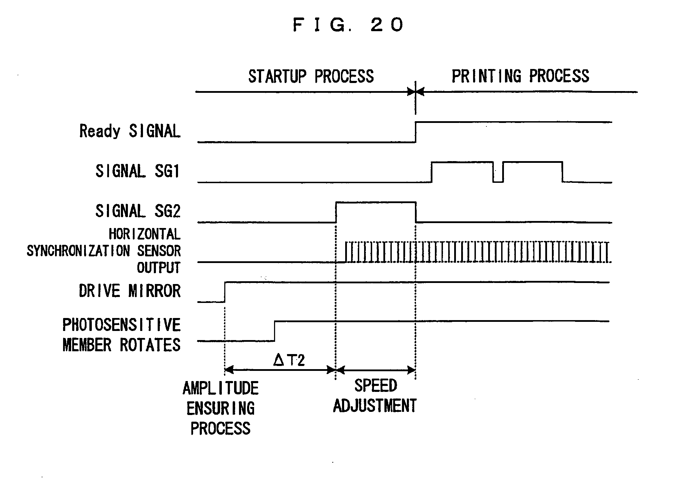

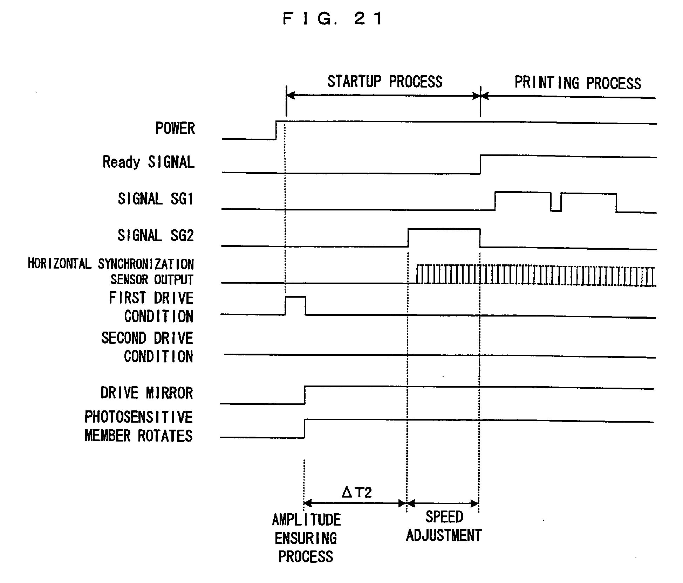

The present invention is not limited to the embodiments above, but may be modified in various manners in addition to the preferred embodiments above, to the extent not deviating from the object of the invention. For instance, although the foregoing has described that the laser source is turned on (Step S3 in Fig. 5) and the speed is adjusted (Step S4 in Fig. 5) while the photosensitive member 2 is in a halt, the photosensitive member 2 may start rotating before the laser source 62 is turned on as shown in Figs. 18 through 21. Since these variations ensure that the photosensitive member 2 is already rotating when the laser source 62 turns on, concentration of the light beam upon the photosensitive member 2 is more effectively prevented and the effect of preventing deterioration of the photosensitive member 2 further improves.

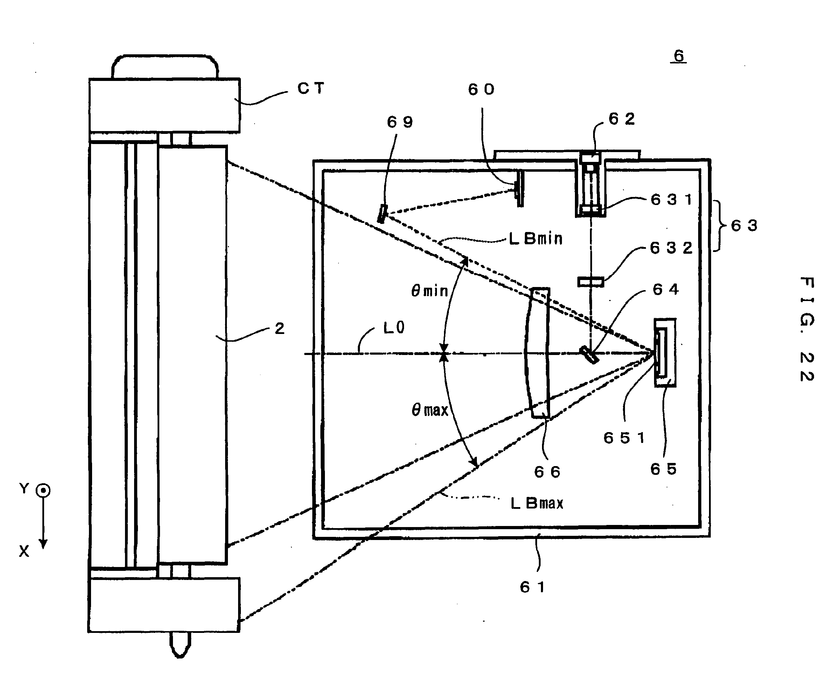

Further, although the embodiments above are directed to the application of the present invention to an apparatus in which two of the horizontal synchronization sensors 60A and 60B, which correspond to the "optical detection sensor" of the present invention, are disposed, the number of the optical detection sensors, where to dispose the optical detection sensors and the like are not limited in particular. For example, a single sensor 60 may detect the scanning light beam as shown in Fig. 22. In other words, the present invention is applicable to an apparatus which comprises at least one sensor which is disposed on the scanning path of the light beam, detects the scanning light beam and outputs a signal.

Further, although the embodiments above require that the light beam from the laser source 62 is incident upon the deflection mirror surface 651 of the deflector 65 in parallel and the deflector 65 deflects the light beam within the same plane, the light beam may be incident at an angle. As shown in Fig. 22 for instance, after shaped by the beam shaping system 63, the light beam from the laser source 62 may be returned by a mirror 64 and incident upon the deflection mirror surface 651 at an acute angle with respect to a reference plane (a plane parallel to a drawing surface of Fig. 22) which is orthogonal to the pivot axis (an axis perpendicular to the drawing surface of Fig. 22) of the deflection mirror surface 651 of the deflector 65.

Further, although the amplitude ensuring process (Step S1 in Fig. 5) is executed prior to turning on of the laser source 62 to set the amplitude value of the deflector 65 to the minimum amplitude value or larger in the embodiments above, the upper limit value of the amplitude has not been described specifically. However, it is preferable from the following point of view that the amplitude value of the deflector 65 is set equal to or larger than the minimum amplitude value but equal to or smaller than a maximum amplitude value in the amplitude ensuring process (Step S1 in Fig. 5). That is, in this type of image forming apparatus, a latent image carrier holding member such as a latent image carrier cartridge CT holds the photosensitive member 2 for free rotations at both ends in the longitudinal direction (the scanning direction X of the light beam) as shown in Fig. 22. Hence, even when the amplitude value of the deflector 65 somewhat increases and the scanning light beam deviates off from the photosensitive member 2, the scanning light beam falls upon the latent image carrier cartridge CT. In other words, as denoted at LBmin in Fig. 22, even when the deflection mirror surface 651 resonates beyond the minimum amplitude value $\theta$ min which is necessary for the scanning light beam LBmin to move past the horizontal synchronization sensor 60, the scanning light beam keeps irradiating the latent image carrier cartridge CT while the amplitude value is not more than the maximum amplitude value $\theta$ max. The "maximum amplitude value $\theta$ max" is indicative of the rotation angle of the deflection mirror surface 651 as it is when the scanning light beam irradiates an edge portion of the latent image carrier cartridge CT.

On the contrary, as the amplitude value exceeds the maximum amplitude value θ max, the deflection mirror surface 651 deviates a part of the scanning light from the latent image carrier cartridge CT and the light intrudes into inside the apparatus. The light beam thus entering inside the apparatus serves as stray light which is one of major causes of deterioration of an image quality.

For preventing the occurrence of this problem above, it is desirable that the amplitude value θ of the deflector 65 satisfies the following inequality:

$$\theta\min \leqq \theta \leqq \theta\max$$

in the amplitude ensuring process (Step S1 in Fig. 5) as described above.

Further, in the embodiments above, although the deflector 65 which is made using a micro machining technique is adopted as an oscillation mirror, the present invention is applicable to an image forming apparatus in general in which a light beam is deflected using a resonating oscillation mirror and the light beam scans on a latent image carrier.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within the true scope of the invention.

According to a further embodiment there is described an image forming apparatus, comprising: a light source which emits a light beam; an oscillation mirror which has a deflection mirror surface; a latent image carrier which is structured to rotate; a mirror driver which resonates said oscillation mirror so that the deflection mirror surface deflects the light beam from said light source to scan on said latent image carrier which is rotating to perform an image formation; and an optical detection sensor which is disposed on a scanning path of the light beam, detects the scanning light beam and outputs a signal, wherein turning on of said light source is permitted after an amplitude ensuring process is executed, the amplitude ensuring process in which said oscillation mirror is resonated in an amplitude equal to or larger than a minimum amplitude value which is necessary for the scanning light beam to move past said optical detection sensor.

According to a further embodiment the image forming apparatus further comprises a displacement detection sensor which is disposed inside or near said oscillation mirror and detects an amount of displacement of the deflection mirror surface, wherein the amplitude ensuring process is arranged to change and set a drive condition for said oscillation mirror by said mirror driver based on the amount of displacement of the deflection mirror surface detected by said displacement detection sensor, thereby ensuring an amplitude equal to or larger than the minimum amplitude value.

According to a further embodiment the image forming apparatus further comprises a storage unit which stores an initial drive condition corresponding to said oscillation mirror, wherein the drive condition for said oscillation mirror in the amplitude ensuring process is set to the initial drive condition when said oscillation mirror starts oscillating but is changed based on the amount of displacement of said deflection mirror surface after said oscillation mirror has started oscillating.

According to a further embodiment the image forming apparatus further comprises a storage unit which stores an initial drive condition corresponding to said oscillation mirror, wherein the amplitude ensuring process is arranged to operate said mirror driver based on the initial drive condition which is read out from said storage unit, thereby ensuring an amplitude equal to or larger than the minimum amplitude value.

According to a further embodiment there is described the image forming apparatus, wherein the amplitude ensuring process is arranged to operate said mirror driver based on an initial drive condition which corresponds to an operating status of said apparatus, thereby ensuring an amplitude equal to or larger than the minimum amplitude value.

According to a further embodiment the image forming apparatus further comprises a storage unit which stores a first drive condition for said oscillation mirror which is suitable to power-on of said apparatus and a second drive condition for said oscillation mirror which is suitable when said apparatus is in operation, wherein in executing the amplitude ensuring process, whether said apparatus is immediately after power-on or in operation is determined, and the initial drive condition is set to the first drive condition when said apparatus is immediately after power-on while the initial drive condition is set to the second drive condition when said apparatus is in operation.

According to a further embodiment there is described the image forming apparatus, wherein said oscillation mirror stops oscillation after completion of previous image formation using said oscillation mirror and remains stand-by until next image formation, a drive condition for said oscillation mirror which corresponds to a relationship between a time required for the previous image formation and a time of the stand-by is set as the initial drive condition, and the amplitude ensuring process is executed prior to the next image formation.

According to a further embodiment the image forming apparatus, further comprises a temperature detector which detects a temperature inside said apparatus, wherein a drive condition for said oscillation mirror which corresponds to the temperature detected by said temperature detector is set as the initial drive condition, and the amplitude ensuring process is then executed.

According to a further embodiment there is described the image forming apparatus, wherein said light source is turned on and the drive condition for said oscillation mirror is adjusted based on an output signal from said optical detection sensor after the amplitude ensuring process is executed but before the image formation is performed.

According to a further embodiment there is described the image forming apparatus, wherein turning on and off of said light source is controlled based on an image signal and an image corresponding to the image signal is formed after the drive condition for said oscillation mirror is adjusted, and said apparatus further comprises a light source driver which is dedicated to control of turning on and off of said light source for the purpose of adjusting the drive condition for said oscillation mirror.

According to a further embodiment the image forming apparatus further comprises a carrier driver which drives said latent image carrier into rotation, wherein said carrier driver makes said latent image carrier rotate prior to turning on of said light source.

According to a further embodiment the image forming apparatus further comprises a latent image carrier holding member which supports said latent image carrier at both ends of said latent image carrier in the scanning direction of the light beam, wherein an amplitude value of said oscillation mirror when the scanning light beam irradiates said latent image carrier holding member is defined as a maximum amplitude value, and in the amplitude ensuring process, said mirror driver resonates said oscillation mirror in an amplitude not less than the minimum amplitude value and not more than the maximum amplitude value.

According to a further embodiment there is described an image forming method of an apparatus which comprises an oscillation mirror which has a deflection mirror surface, a light source which emits a light beam, and a latent image carrier, said method in which the deflection mirror surface of the oscillation mirror which is resonated deflects the light beam from the light source, and the light beam scans on the latent image carrier to perform an image formation, said method comprising: an image forming step of performing the image formation based on a signal which an optical detection sensor which is disposed on a scanning path of the light beam outputs every time the optical detection sensor detects the light beam; and a startup step of stabilizing resonance of the oscillation mirror prior to said image forming step, wherein said startup step comprises: an amplitude ensuring step of, while maintaining the light source turned off, resonating the oscillation mirror in an amplitude equal to or larger than a minimum amplitude value which is necessary for the scanning light beam to move past the optical detection sensor; and an adjustment step of, after execution of said amplitude ensuring step, turning on the scanning light and adjusting a drive condition for the oscillation mirror based on the signal which the optical detection sensor outputs.

According to a further embodiment the image forming method further comprises a setup step of, prior to execution of said startup step, setting an initial drive condition corresponding to the oscillation mirror, wherein at said amplitude ensuring step, the mirror driver operates under the initial drive condition set at said setup step, thereby ensuring an amplitude equal to or larger than the minimum amplitude value.

According to a further embodiment the image forming method further comprises a setup step of, prior to execution of said startup step, setting an initial drive condition corresponding to an operating status of said apparatus, wherein at said amplitude ensuring step, the mirror driver operates under the initial drive condition set at said setup step, thereby ensuring an amplitude equal to or larger than the minimum amplitude value.

According to a further embodiment there is described the image forming method, wherein the initial drive condition which is set at said setup step is stored in a storage unit in advance.

**Claims**

1. An image forming method of an apparatus, which comprises a light source which emits a light beam, an oscillation mirror which has a deflection mirror surface, and a latent image carrier that is structured to rotate, said image forming method in which the deflection mirror surface of the oscillation mirror which is resonated deflects the light beam from the light source to the light beam scan on the latent image carrier to perform an image formation, said method comprising the steps of:

   (1) resonating the oscillation mirror, and
   (2) after execution of step (1) for a period of time, turning on said light source.

2. The image forming method of claim 1, further comprising the step of:

   (3) adjusting an amplitude after execution of step (2).

3. The image forming method of claim 2, further comprising the step of:

   (4) performing the image formation after execution of step(3).

4. An image forming apparatus, comprising:

   a light source which emits a light beam;
   an oscillation mirror which has a deflection mirror surface;

a latent image carrier which is structured to rotate;

a mirror driver which resonates said oscillation mirror so that the deflection mirror surface deflects the light beam from said light source to said latent image carrier which perform an image formation, wherein a process of turning on said light source is executed after said oscillation mirror is resonated for a period of time.

5. The image forming apparatus of claim 4, further comprising:

an amplitude adjusting process that is executed after said turning on process is performed.

6. The image forming apparatus of claim 5, wherein the image formation is performed after said amplitude adjusting process is executed.

EP 1 950 622 A2

F I G. 1

15

FIG. 2

EP 1 950 622 A2

FIG. 3

EP 1 950 622 A2

EP 1 950 622 A2

F I G. 4

10

18

# F I G. 5

```
                    ┌─────────────┐
                    │  STARTUP    │
                    │  PROCESS    │
                    └─────────────┘
                           │
                           ▼
S 1 ┌───────────────────────────────┐
    │ ‖    AMPLITUDE               ‖ │
    │ ‖  ENSURING PROCESS         ‖ │
    └───────────────────────────────┘
                           │
                           ▼
S 2         ╱ ‾ ‾ ‾ ‾ ‾ ‾ ╲              NO
          ╱  PREDETERMINED   ╲───────────┐
          ╲  TIME HAS ELAPSED? ╱          │
            ╲ _ _ _ _ _ _ ╱               │
                  │ YES                    │
                  ▼                        │
S 3 ┌───────────────────────┐            (loops back
    │   LASER SOURCE        │             to S2)
    │   TURNS ON            │
    └───────────────────────┘
                  │
                  ▼
S 4 ┌───────────────────────┐
    │  SPEED ADJUSTMENT     │
    │  BASED ON             │
    │  SENSOR OUTPUT        │
    └───────────────────────┘
                  │
                  ▼
S 5 ┌───────────────────────┐
    │  Ready SIGNAL IS       │
    │  OUTPUT               │
    └───────────────────────┘
                  │
                  ▼
            ┌─────────────┐
            │    END      │
            └─────────────┘
```

F I G. 6

STARTUP PROCESS · PRINTING PROCESS

Ready SIGNAL

SIGNAL SG1

SIGNAL SG2

HORIZONTAL
SYNCHRONIZATION
SENSOR OUTPUT

DRIVE MIRROR

DISPLACEMENT DETECTION
SENSOR OUTPUT

ΔT1

AMPLITUDE
ENSURING
PROCESS

SPEED
ADJUSTMENT

EP 1 950 622 A2

F I G. 7

AMPLITUDE
ENSURING PROCESS

S 1 1 1
SET TO INITIAL
DRIVE CONDITION

S 1 1 2
DISPLACEMENT
DETECTION SENSOR DETECTS
AMPLITUDE VALUE

S 1 1 4
CHANGE AND SET
DRIVE CONDITION

S 1 1 3
AMPLITUDE ≧
PREDETERMINED
VALUE?

NO

YES

RETURN

# FIG. 8

CPU 101

MEASURING UNIT 102d

STORAGE UNIT 102e

MIRROR DRIVER 102c

LIGHT SOURCE DRIVER 102b

Ready

SG1

SG2 102a

HORIZONTAL SYNCHRONIZA-TION SENSOR 60A, 60B

ACTIVATOR 652

LASER SOURCE 62

10

6

102

# F I G. 9

STARTUP PROCESS | PRINTING PROCESS

Ready SIGNAL

SIGNAL SG1

SIGNAL SG2

HORIZONTAL
SYNCHRONIZATION
SENSOR OUTPUT

DRIVE MIRROR

$\Delta$T2

AMPLITUDE
ENSURING
PROCESS

SPEED
ADJUSTMENT

# F I G. 1 O

AMPLITUDE
ENSURING PROCESS

S 1 2 1

READ INITIAL DRIVE
CONDITION
FROM STORAGE UNIT

S 1 2 2

DEFLECTOR OPERATES
UNDER INITIAL
DRIVE CONDITION

RETURN

FIG. 11

# FIG. 12

```
        ( AMPLITUDE
        ENSURING PROCESS )
                |
                v
S131 ---- < OPERATING STATUS? > ---- IN OPERATION -----+
                |                                        |
        IMMEDIATELY                                      |
        AFTER POWER-ON                                   |
                |                                        |
                v                                        v
S132 -- [INITIAL DRIVE CONDITION      S133 -- [INITIAL DRIVE CONDITION
        = FIRST DRIVE CONDITION]              = SECOND DRIVE CONDITION]
                |                                        |
                +<---------------------------------------+
                |
                v
S134 -- [DEFLECTOR OPERATES UNDER
         INITIAL DRIVE CONDITION]
                |
                v
            ( RETURN )
```

F I G. 1 3

# FIG. 14

EP 1 950 622 A2

F I G. 1 5

```
        ╭──────────────────╮
        │    AMPLITUDE     │
        │ ENSURING PROCESS │
        ╰──────────────────╯
                 │
                 ▼
S135    ┌────────────────────┐
        │   CALCULATE RATIO  │
        │   OF PRINT TIME T1 │
        │ TO STAND-BY TIME T2│
        └────────────────────┘
                 │
                 ▼
S136    ┌────────────────────┐
        │ IDENTIFY INITIAL DRIVE │
        │ CONDITION BASED ON THE │
        │   RATIO (= T1/T2)  │
        └────────────────────┘
                 │
                 ▼
S134    ┌────────────────────┐
        │ DEFLECTOR OPERATES UNDER │
        │ INITIAL DRIVE CONDITION  │
        └────────────────────┘
                 │
                 ▼
        ╭──────────────────╮
        │      RETURN      │
        ╰──────────────────╯
```

FIG. 16

F I G. 1 7

```
        ╭─────────────────╮
        │    AMPLITUDE     │
        │ ENSURING PROCESS │
        ╰─────────────────╯
                 │
                 ▼
S 1 3 7   ┌─────────────────┐
          │ DETECT TEMPERATURE │
          └─────────────────┘
                 │
                 ▼
S 1 3 8   ┌─────────────────┐
          │ SET INITIAL DRIVE │
          │ CONDITION BASED ON │
          │  DETECTION VALUE  │
          └─────────────────┘
                 │
                 ▼
S 1 3 4   ┌─────────────────┐
          │ DEFLECTOR OPERATES │
          │  UNDER INITIAL   │
          │  DRIVE CONDITION  │
          └─────────────────┘
                 │
                 ▼
          ╭─────────────────╮
          │     RETURN       │
          ╰─────────────────╯
```

F I G. 1 8

```
                    ┌──────────────┐
                    │   STARTUP    │
                    │   PROCESS    │
                    └──────┬───────┘
                           │
   S 1 ──┐          ┌──────▼───────┐
         │          │              │
        ║│║         │  AMPLITUDE   │
                    │ENSURING PROCESS│
                    │              │
                    └──────┬───────┘
                           │
   S 6 ──┐          ┌──────▼───────┐
         │          │PHOTOSENSITIVE│
                    │MEMBER STARTS │
                    │  ROTATING    │
                    └──────┬───────┘
                           │           ◄───────┐
                           │                    │
   S 2 ──┐            ╱────▼────╲               │
         │          ╱PREDETERMINED╲   NO         │
                    ╲TIME HAS ELAPSED?╱ ─────────┘
                     ╲────┬────╱
                          │ YES
   S 3 ──┐          ┌─────▼──────┐
         │          │LASER SOURCE│
                    │  TURNS ON  │
                    └─────┬──────┘
                          │
   S 4 ──┐          ┌─────▼──────┐
         │          │SPEED ADJUSTMENT│
                    │  BASED ON  │
                    │SENSOR OUTPUT│
                    └─────┬──────┘
                          │
   S 5 ──┐          ┌─────▼──────┐
         │          │Ready SIGNAL│
                    │ IS OUTPUT  │
                    └─────┬──────┘
                          │
                    ┌─────▼──────┐
                    │    END     │
                    └────────────┘
```

EP 1 950 622 A2

F I G. 1 9

STARTUP PROCESS      PRINTING PROCESS

Ready SIGNAL

SIGNAL SG1

SIGNAL SG2

HORIZONTAL
SYNCHRONIZATION SENSOR
OUTPUT

DRIVE MIRROR

DISPLACEMENT DETECTION
SENSOR OUTPUT

PHOTOSENSITIVE
MEMBER ROTATES

ΔT1

AMPLITUDE
ENSURING
PROCESS

SPEED
ADJUSTMENT

32

# F I G. 2 0

STARTUP PROCESS | PRINTING PROCESS

Ready SIGNAL

SIGNAL SG1

SIGNAL SG2

HORIZONTAL SYNCHRONIZATION SENSOR OUTPUT

DRIVE MIRROR

PHOTOSENSITIVE MEMBER ROTATES

$\Delta$T2

AMPLITUDE ENSURING PROCESS

SPEED ADJUSTMENT

F I G. 2 1

FIG. 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1302317 B